# EUROPEAN PATENT SPECIFICATION

(11) **EP 2 248 701 B1**
(45) Date of publication and mention of the grant of the patent: **29.07.2015**
(21) Application number: 09713992.7
(22) Date of filing: 16.02.2009
(51) Int. Cl.: B60N 2/22, A47C 1/025

(54) **VEHICLE SEAT RECLINING STRUCTURE**
STRUKTUR ZUM VERSTELLEN EINES FAHRZEUGSITZES
STRUCTURE INCLINABLE DE SIÈGE DE VÉHICULE

(30) Priority: 26.02.2008 JP 2008044836
(43) Date of publication of application: 10.11.2010
(73) Proprietor: Toyota Shatai Kabushiki Kaisha, Kariya-shi Aichi 448-8666 (JP)
(72) Inventor: KURACHI, Shinji, Kariya-shi Aichi 448-8666 (JP)
(74) Representative: Kramer Barske Schmidtchen Patentanwälte PartG mbB
(86) International application number: PCT/JP2009/052513
(87) International publication number: WO 2009/107499

(56) References cited:
- DE-A1- 4 032 283
- DE-B- 1 054 858
- FR-A5- 2 079 696
- GB-A- 1 090 770
- JP-A- 7 257 257
- JP-A- 8 131 291

## Description

### TECHNICAL FIELD

The present invention relates to a vehicle seat reclining structure (see, for example, JP 8-131 290 A, hereafter also called Patent Document 1 and corresponding to the preamble of claim 1).

### BACKGROUND ART

Conventionally, a vehicle seat reclining structure is known, for restricting backward inclination of a seatback portion of the vehicle seat in the event of, for example, a rear-end collision.

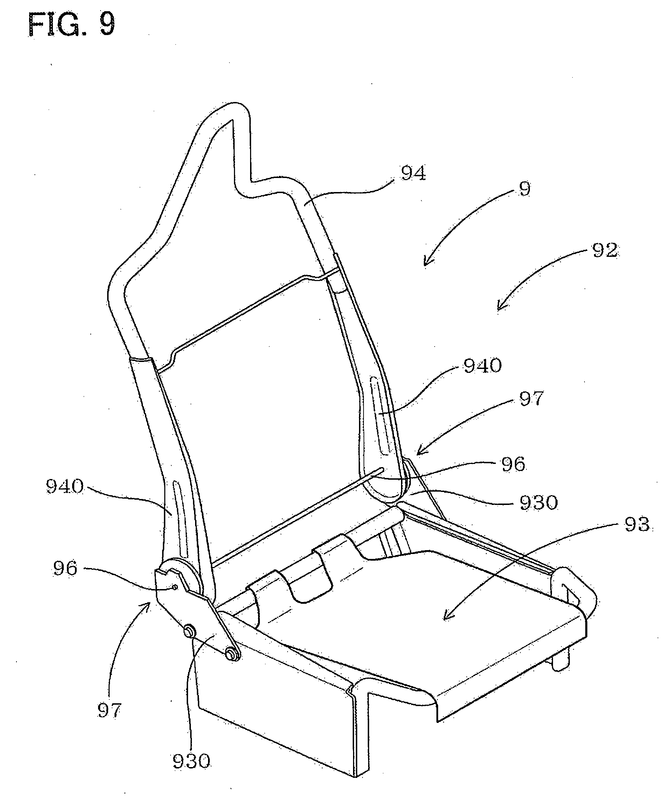

This reclining structure 9 includes, as shown in FIG. 9, a pair of lower arms 930 provided on both left and right sides at a rear end of a seat portion 93 of the vehicle seat 92, a pair of side frames 940 rotatably supported respectively by the pair of lower arms 930 and disposed on both left and right sides at a lower end of a seatback portion 94 of the vehicle seat 92, and a pair of recliners 97 provided around pivot support portions 96 of the lower arms 930 and side frames 940 on both sides for retaining the seatback portion 94 at a desired angle forward or backward around the pivot support portion 96.

However, with such a reclining structure 9 provided with the recliners 97 in the pivot support portions 96 on both sides, the weight and production cost of the vehicle seat 92 tend to be increased.

Accordingly, a reclining structure 8 has been proposed, in which the recliner 97 is provided to only one of the pivot support portions 96 of the pair of lower arms 930 and pair of side frames 940 (see, for example, Patent Documents 1 and 2).

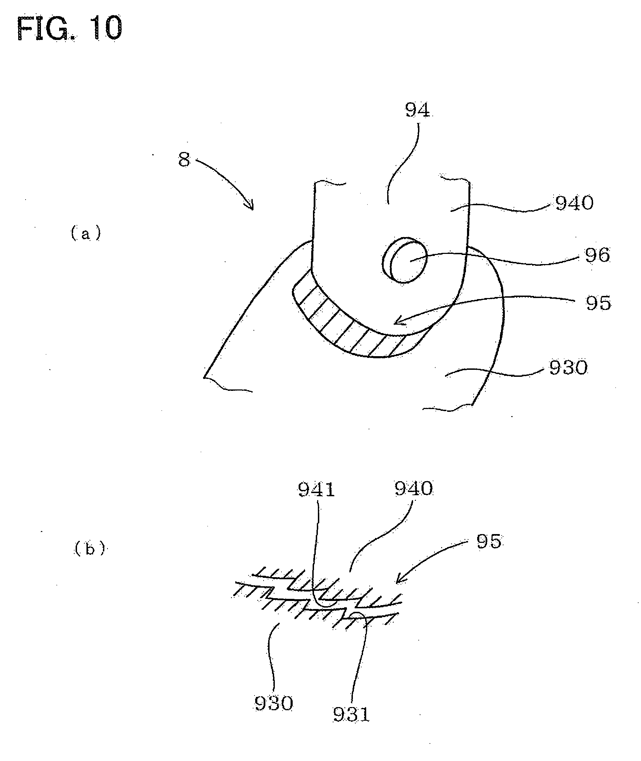

Namely, in such a reclining structure 8, as shown in FIG. 10A, a stopper 95 that restricts the degree of inclination of the seatback portion 94 backward around the pivot support portion 96 is provided to one of the pivot support portions 96 of the pair of lower arms 930 and pair of side frames 940. This stopper 95 is formed by, as shown in FIG. 10B, waveform engaging teeth 931 on the lower arm 930 and an engagement teeth portion 941 on the side frame 940 to be engaged with these engaging teeth 931.

The recliner 97 is provided to the other pivot support portion 96.
Patent Document 1: Japanese Published Unexamined Patent Application No. 8-131290
Patent Literature 2: Japanese Published Unexamined Patent Application No. 8-131291

FR 2 079 696 A5 relates to a vehicle-seat reclining structure, which is based on the engagement of two disc-shaped structures, each including gear-like structures.

GB 1,090,770 A relates to a seat reclining mechanism comprising a pair of arcuate sets of teeth for respective attachment to the back and squab at a seat, the sets of teeth being relatively movable into and out of meshing engagement with one another, a cam surface operatively connected to one arcuate set of teeth, a torsion spring angularly urging the cam surface in a direction such that said one arcuate set of teeth is urged into engagement with the other arcuate set of teeth, and actuating means to angularly move the cam surface against the action of the torsion spring so as to permit disengagement of the sets of teeth, the sets of teeth being relatively angularly adjustable when disengaged so as to permit alteration in the relative inclination of a back and squab attached to the respective sets of teeth.

DE 10 54 858 B relates to a seat reclining device including an articulated joint based on a tooth- or friction coupling.

### DISCLOSURE OF THE INVENTION

### Problems to be Solved by the Invention

However, in such a reclining structure 8, the engaging teeth 931 and engagement teeth 941 do not mate with each other on a rotating track around the pivot support portion 96, and when an excessive load is applied to the seatback portion 94, the side frame 940, for example, or the like, undergoes torsional deformation so that the engaging teeth 931 and engagement teeth 941 mate with each other to function as the stopper 95. Therefore, even if an excessive impact load is applied, if torsional deformation does not occur to a sufficient extent in the side frame 940 or the like, there may be cases where the stopper 95 cannot exhibit its intended function.

Accordingly there was a need for a vehicle seat reclining structure capable of reliably exhibiting a stopper function with a simple structure.

The present invention was devised in view of the problem in the conventional techniques, its object being to provide a vehicle seat reclining structure capable of reliably exhibiting a stopper function with a simple structure.

### MEANS FOR SOLVING THE PROBLEMS

According to the present invention, a vehicle seat reclining structure according to claim 1 is provided.

Further developments of the present invention are set out in the dependent claims.

In the reclining structure of the present invention, the arm-side abutment portions and frame-side abutment portions are formed at such positions as to overlap each other on the rotating track around the pivot support portion. Therefore, when the seatback portion turns a predetermined angle around the pivot support portion, the arm-side abutment portions and frame-side abutment portions reliably abut on each other to perform the stopper function.

The configuration is such that the plurality of arm-side abutment portions and the plurality of frame-side abutment portions abut on each other when the seatback portion is inclined at a predetermined angle. Therefore, when the seatback portion is inclined due to an excessive load applied to the vehicle seat forward or backward, the plurality of arm-side abutment portions can abut on the plurality of frame-side abutment portions at a plurality of locations.

Accordingly, even if an excessive torque is applied to the stopper due to the seatback portion inclining at more than a predetermined angle, the load can be distributed to the plurality of abutment locations. Thus a stopper that can withstand an excessive torque can be obtained.

Consequently, when an excessive load is applied to the seatback portion, for example, in the event of a collision, the stopper can reliably exhibit its function to prevent the seatback portion from inclining at more than a predetermined angle.

With the reclining structure capable of reliably exhibiting a stopper function with a simple structure thus obtained, an increase in the weight and production cost of vehicle seats can be avoided.

The present invention can thus provide a vehicle seat reclining structure capable of reliably exhibiting a stopper function with a simple structure.

### BRIEF DESCRIPTION OF THE DRAWINGS

FIG. 1 is a side view of a reclining structure in one embodiment.
FIG. 2 is an illustrative diagram of arm-side abutment portions and frame-side abutment portions in one embodiment.
FIG. 3 is a cross-sectional view along the line A-A in FIG. 1.
FIG. 4 is a cross-sectional view along the line B-B in FIG. 1.
FIG. 5 is a cross-sectional view showing a state in which the arm-side abutment portions and frame-side abutment portions are abutting on each other in one embodiment.
FIG. 6 is a perspective view of a lower arm in one embodiment.
FIG. 7 is a perspective view of a side frame in one embodiment.
FIG. 8 is a perspective view of a vehicle seat in one embodiment.
FIG. 9 is a perspective view of a vehicle seat in a conventional example.
FIG. 10(a) is a perspective view of a stopper and FIG. 10(b) is an illustrative diagram showing the stopper structure, of a conventional example.

### BEST MODE FOR CARRYING OUT THE INVENTION

Description will be made herein referring to the left side and right side relative to the driving direction of the vehicle as "left side" and "right side".

In the present invention, preferably, the stopper is configured to restrict both degree of forward inclination and degree of backward inclination of the seatback portion, and the plurality of arm-side abutment portions and the plurality of frame-side abutment portions include a plurality of forward-inclination arm-side abutment portions and a plurality of forward-inclination frame-side abutment portions that abut on each other when the seatback portion is inclined forward in a predetermined degree, and a plurality of backward-inclination arm-side abutment portions and a plurality of backward-inclination frame-side abutment portions that abut on each other when the seatback portion is inclined backward in a predetermined degree.

Thereby, even when an excessive torque is applied that causes the seatback portion to incline forward or backward, the arm-side abutment portions and frame-side abutment portions reliably abut on each other at the plurality of locations to readily distribute the load. Thus a reclining structure capable of reliably exhibiting a stopper function with a simple structure can be obtained.

The arm-side abutment portions may be formed on an arm-side protrusion protruding from the lower arm toward the side frame.

Thereby, the arm-side abutment portions can be readily formed by making part of the lower arm protrude toward the side frame.

The plurality of arm-side abutment portions is formed on at least one end face in a rotating direction around the pivot support portion of the arm-side protrusion.

Thereby, the plurality of arm-side abutment portions can be formed by one arm-side protrusion, whereby a reclining structure capable of more reliably exhibiting a stopper function with a simple structure can be obtained.

Furthermore, the arm-side protrusion is formed by cutting and raising part of the lower arm, and both ends in a direction orthogonal to the rotating direction of the arm-side protrusion are coupled to a main body of the lower arm.

Thereby, arm-side protrusions with excellent strength can be obtained, whereby a reclining structure capable of more reliably exhibiting a stopper function with a simple structure can be obtained.

The frame-side abutment portions are formed on a frame-side protrusion protruding from the side frame toward the lower arm.

Thereby, the frame-side abutment portions can be readily formed by making part of the side frame protrude toward the lower arm.

The plurality of frame-side abutment portions is formed on at least one end face of the frame-side protrusion in a rotating direction around the pivot support portion.

Thereby, the plurality of frame-side abutment portions can be formed by one frame-side protrusion, whereby a reclining structure capable of more reliably exhibiting a stopper function with a simple structure can be obtained.

Furthermore, the frame-side protrusion is formed by cutting and raising part of the side frame, and both ends in a direction orthogonal to the rotating direction of the frame-side protrusion are coupled to a main body of the side frame.

Thereby, frame-side protrusions with excellent strength can be obtained, whereby a reclining structure capable of more reliably exhibiting a stopper function with a simple structure can be obtained.

Preferably, the arm-side abutment portions and frame-side abutment portions are formed around an entire circumference of the pivot support portion.

Thereby, even when an excessive torque is applied to the stopper, the load can be sufficiently distributed to the plurality of locations where the arm-side abutment portions and frame-side abutment portions formed around the entire circumference abut on each other. As a result, a reclining structure capable of reliably preventing the seatback portion from inclining at more than a predetermined angle and of exhibiting a stopper function with more certainty can be obtained.

Preferably, the arm-side abutment portions and frame-side abutment portions are formed circumferentially equally around the pivot support portion.

Thereby, the load can be equally distributed to each of the arm-side abutment portions and frame-side abutment portions, and a reclining structure capable of more reliably preventing the seatback portion from inclining at more than a predetermined angle and of exhibiting a stopper function with more certainty can be obtained.

Preferably, the arm-side abutment portions are formed on an arm-side protrusion protruding from the lower arm toward the side frame, while the frame-side abutment portions are formed on a frame-side protrusion protruding from the side frame toward the lower arm, and the arm-side protrusion and frame-side protrusion are respectively formed in plurality and alternately arranged in a rotating direction around the pivot support portion, with the plurality of arm-side abutment portions being respectively formed on both end faces in a rotating direction of each of the arm-side protrusions, and the plurality of frame-side abutment portions being respectively formed on both end faces in the rotating direction of each of the frame-side protrusions.

Thereby, a reclining structure capable of even more reliably preventing the seatback portion from inclining at more than a predetermined angle and of exhibiting a stopper function with more certainty can be obtained.

### EMBODIMENTS

### (Embodiment 1)

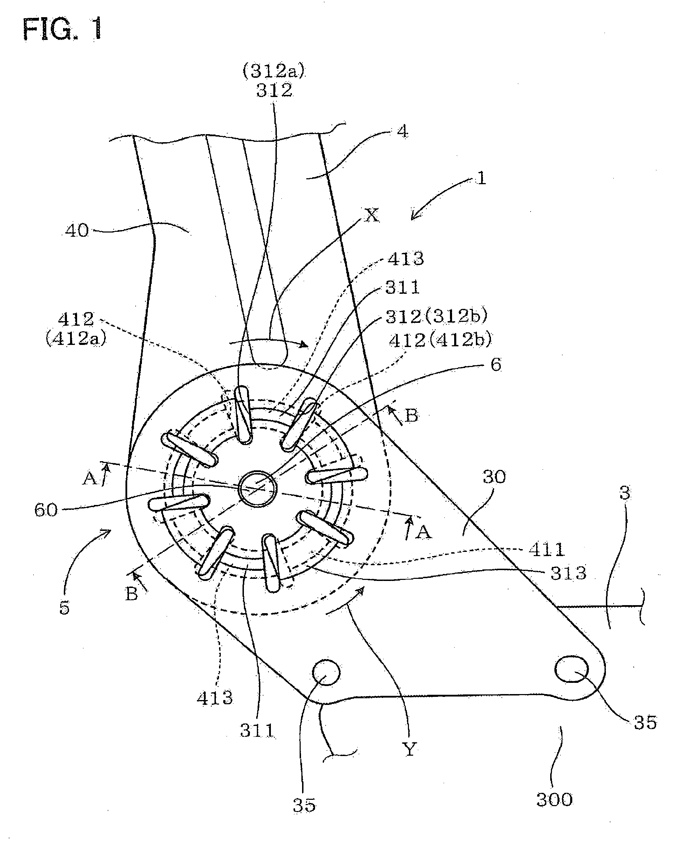

The vehicle seat reclining structure according to embodiments of the present invention will be hereinafter described with reference to FIGs. 1 to 8.

As shown in FIGs. 1 and 6 to 8, the reclining structure 1 for a vehicle seat 2 of this embodiment includes a pair of lower arms 30 provided on both left and right sides at a rear end of a seat portion 3 of the vehicle seat 2, and a pair of side frames 40 rotatably supported respectively by the pair of lower arms 30 and disposed on both left and right sides at a lower end of a seatback portion 4 of the vehicle seat 2.

The reclining structure 1 further includes a recliner 7 provided around one of pivot support portions 6 of the lower arms 30 and the side frames 40 for retaining the seatback portion 4 at a desired angle forward or backward around the pivot support portion 6, and a stopper 5 provided around the other one of pivot support portions 6 of the lower arms 30 and the side frames 40 for restricting the degree of inclination of the seatback portion 4 forward or backward around the pivot support portion 6 as a pivot.

The reclining structure 1 of this embodiment will be described in detail below.

The reclining structure 1 of the present invention is used for a vehicle seat 2 that does not need to be largely reclined in a vehicle such as a van.

The reclining structure 1 includes the recliner 7 on one side of the vehicle seat 2 and the stopper 5 on the other side, as described above.

The stopper 5 will be described below.

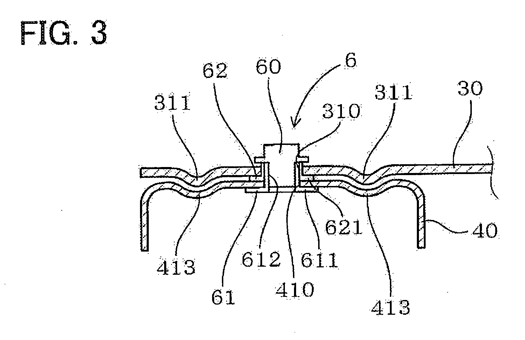

The stopper 5 includes, as shown in FIGs. 3 to 5, a plurality of arm-side abutment portions 312 formed on the lower arm 30 and a plurality of frame-side abutment portions 412 formed on the side frame 40 at positions overlapping each other on a rotating track around the pivot support portion 6.

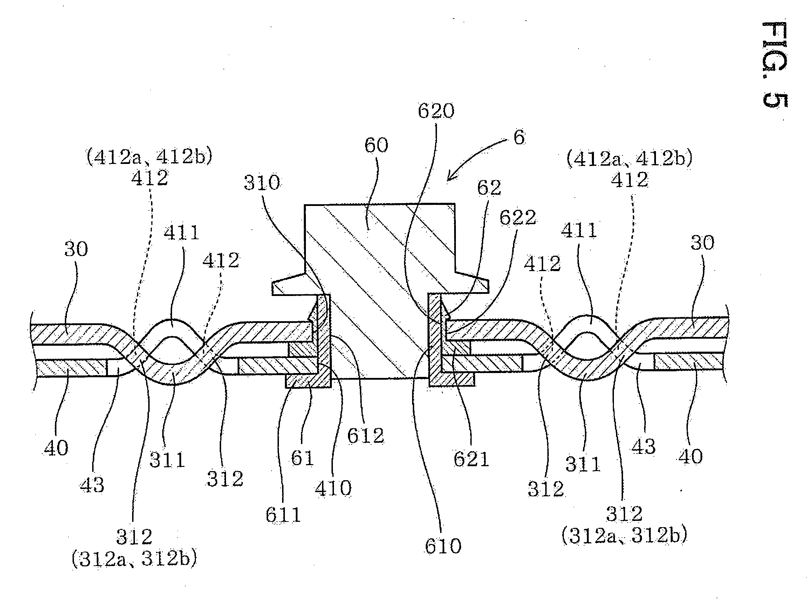

It is configured such that the plurality of arm-side abutment portions 312 and the plurality of frame-side abutment portions 412 abut on each other as shown in FIG. 5 when the seatback portion 4 is inclined at a predetermined angle.

Namely, the stopper 5 is configured to restrict the degree of forward inclination and the degree of backward inclination of the seatback portion 4 around the pivot support portion 6.

The lower arm 30 will be first described before describing the specific structure of the stopper 5 below.

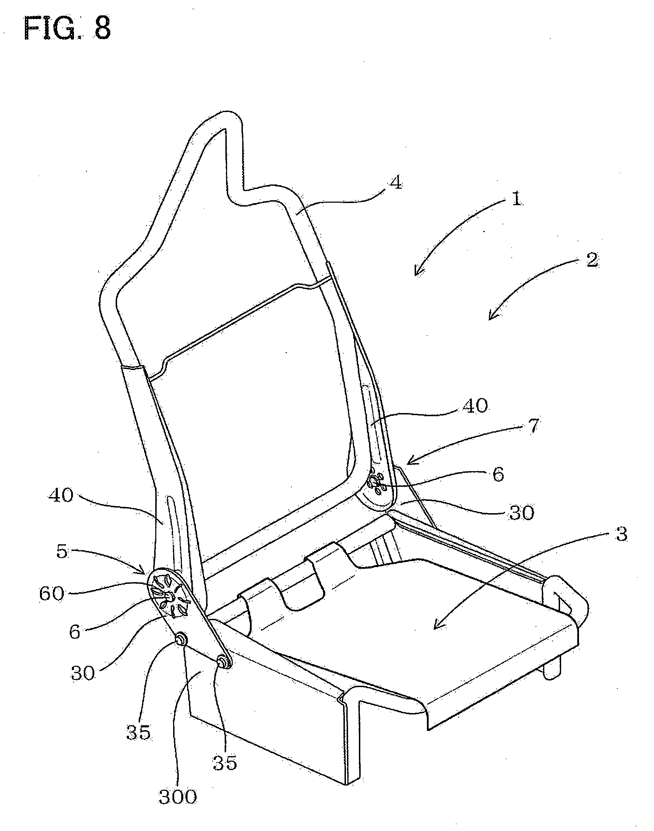

The pair of lower arms 30 are respectively fixed to side portions 300 on both sides at the rear end of the seat portion 3 with, for example, bolts 35 or the like, as shown in FIGs. 1 and 8.

The lower arm 30 is formed with an arm shaft hole 310 for passing through a rotating shaft 60 therein which forms the pivot support portion 6, as shown in FIG. 3 to FIG. 6.

A bush 62 is fitted by insertion in the arm shaft hole 310 of the lower arm 30 on the side on which the stopper 5 is provided.

The bush 62 includes, as shown in FIG. 5, an inner hole 620 in which a female-threaded nut 61 to be described later is fitted by insertion, a fitting portion 622 fitted with an end edge of the arm shaft hole 310 on the outer circumference thereof, and a flange portion 621 formed to extend outwardly from one end of the fitting portion 622.

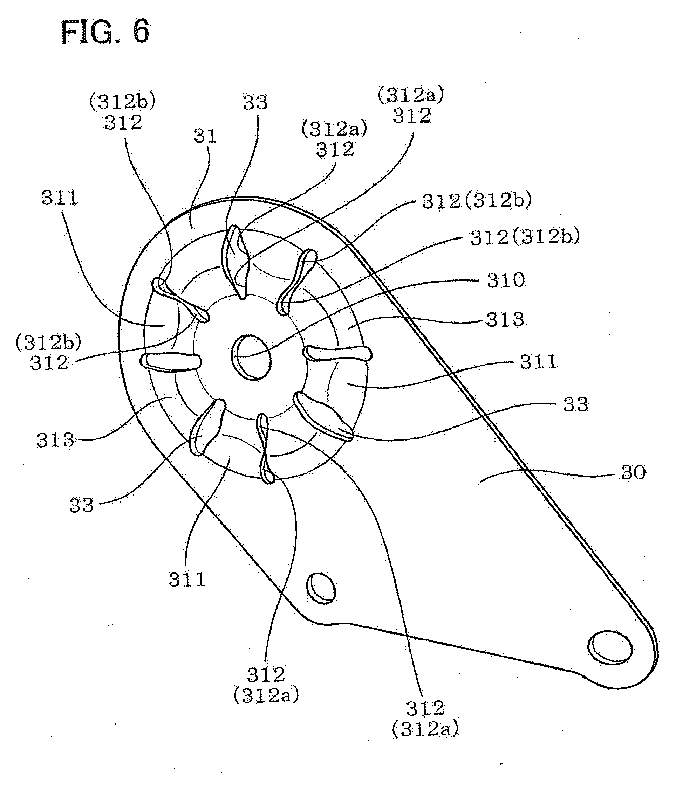

The lower arm 30 is further provided with four arm-side protrusions 311 circumferentially equally formed around the entire circumference of the arm shaft hole 310, and four arm-side recesses 313 to be described later, these being alternately arranged as shown in FIG. 6. A total of eight slits 33 penetrating the lower arm 30 are arranged between the arm-side protrusions 311 and arm-side recesses 313.

The arm-side protrusion 311 is formed by cutting and raising part of the lower arm 30 toward the side frame 40 (farther from the viewer in FIG. 6), its both ends in a direction orthogonal to the rotating direction being coupled to the main body of the lower arm 30.

Each arm-side protrusion 311 is formed such that it is sandwiched between slits 33 at both ends in the rotating direction, as shown in FIGs. 1 and 6.

Between two of the plurality of arm-side protrusions 311 are respectively disposed the arm-side recesses 313, being sandwiched between the slits 33 at both ends in the rotating direction, and concaved toward the opposite side of the protruding direction of the arm-side protrusions 311 (toward the viewer in FIG. 6).

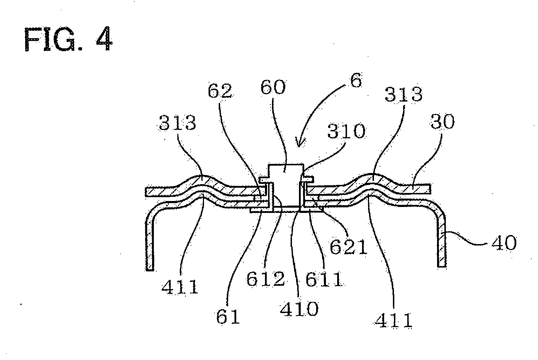

These arm-side recesses 313 are overlapped on frame-side protrusions 411 such that they do not interfere with each other when the lower arm 30 and side frame 40 are assembled together, as shown in FIG. 4.

The arm-side abutment portions 312 are formed on the arm-side protrusions 311, as mentioned above. More specifically, as shown in FIGs. 1, 2 and 5, both end faces in the rotating direction of each arm-side protrusion 311 are formed orthogonally to the rotating direction, with two arm-side abutment portions 312 being formed on each of the end faces.

More specifically, the arm-side abutment portions 312 formed on each arm-side protrusion 311 include, as shown in FIGs. 1, 2 and 6, two forward-inclination arm-side abutment portions 312a that abut on the frame-side abutment portions 412 when the seatback portion 4 is inclined forward in a predetermined degree, and two backward-inclination arm-side abutment portions 312b that abut on the frame-side abutment portions 412 when the seatback portion 4 is inclined backward in a predetermined degree. Four arm-side protrusions 311 having such a structure are provided, as described above. Namely, the arm-side abutment portions 312 are formed at eight locations for forward inclination and at eight locations for backward inclination in the stopper 5, i.e., the stopper 5 as a whole having them at sixteen locations.

Next, the side frame 40 will be described.

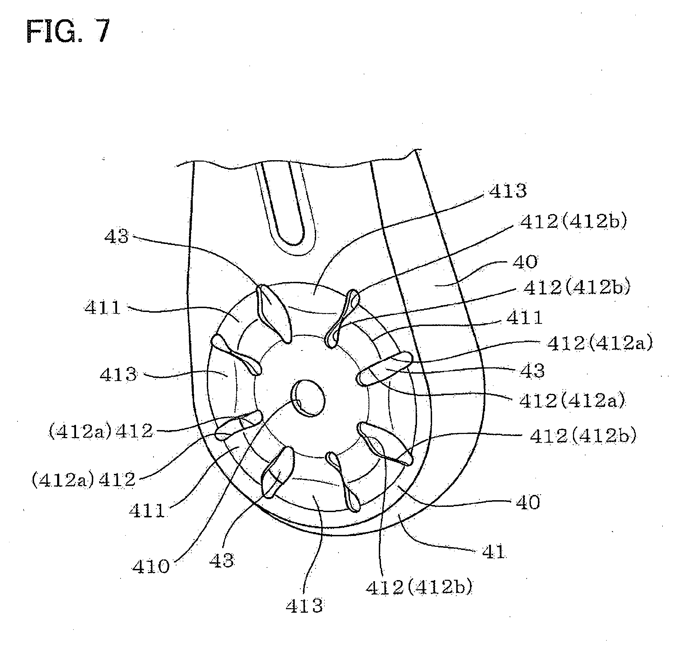

The pair of side frames 40 are provided with a frame shaft hole 410 at a lower end portion thereof for passing through the rotating shaft 60 therein, as shown in FIGs. 1 and 7.

The female-threaded nut 61 is fitted by insertion in the frame shaft hole 410 of the side frame 40 on the side on which the stopper 5 is provided, as shown in FIG. 3 to FIG. 5.

In this embodiment, the female-threaded nut 61 includes a tubular portion 610 having a screw hole 612 in which the rotating shaft 60 is screwed, and a flange portion 611 formed to protrude outwardly from one end of the tubular portion 610. The female-threaded nut 61 is attached by inserting the tubular portion 610 into the inner hole 620 of the bush 62 such that the end edge of the frame shaft hole 410 in the frame-side protrusion 411 is held between this flange portion 611 and the flange portion 621 of the bush 62. Thereby, the lower arm 30 and side frame 40 are rotatably supported by each other with a predetermined clearance at the pivot support portion 6.

The side frame 40 is further provided with four frame-side protrusions 411 circumferentially equally formed around the entire circumference of the frame shaft hole 410, and four frame-side recesses 413 to be described later, these being alternately arranged as shown in FIG. 7. A total of eight slits 43 penetrating the side frame 40 are arranged between the frame-side protrusions 411 and frame-side recesses 413.

The frame-side protrusion 411 is formed by cutting and raising part of the side frame 40 toward the lower arm 30 (toward the viewer in FIG. 7), its both ends in a direction orthogonal to the rotating direction being coupled to the main body of the side frame 40.

Each frame-side protrusion 411 is formed such that it is sandwiched between slits 43 at both ends in the rotating direction, as shown in FIGs. 1, 2 and 7.

Between two of the plurality of frame-side protrusions 411 are respectively disposed the frame-side recesses 413, being sandwiched between the slits 43 at both ends in the rotating direction, and concaved toward the opposite side of the protruding direction of the frame-side protrusions 411 (farther from the viewer in FIG. 7).

These frame-side recesses 413 are overlapped on the arm-side protrusions 311 such that they do not interfere with each other when the lower arm 30 and side frame 40 are assembled together, as shown in FIG. 3.

The frame-side abutment portions 412 are formed on the frame-side protrusions 411, as mentioned above. More specifically, as shown in FIGs. 1, 2 and 5, both end faces in the rotating direction of each frame-side protrusion 411 are formed orthogonally to the rotating direction, with two frame-side abutment portions 412 being formed on each of the end faces.

More specifically, the frame-side abutment portions 412 formed on each frame-side protrusion 411 include, as shown from FIGs. 1, 2 and 7, two forward-inclination frame-side abutment portions 412a that abut on the arm-side abutment portions 312 when the seatback portion 4 is inclined forward in a predetermined degree, and two backward-inclination frame-side abutment portions 412b that abut on the arm-side abutment portions 312 when the seatback portion 4 is inclined backward in a predetermined degree. Four frame-side protrusions 411 having such a structure are provided, as described above. Namely, the frame-side abutment portions 412 are formed at eight locations for forward inclination and at eight locations for backward inclination in the stopper 5, i.e., the stopper 5 as a whole having them at sixteen locations.

Next, one example of how to form the stopper 5 will be described.

First, the arm-side abutment portion 312 will be described.

Eight slits 33 are formed in a flat metal plate forming the lower arm 30 circumferentially equally around the entire circumference around the pivot support portion 6.

Next, of the regions between adjacent slits 33, four regions that are not adjoining each other are deformed to protrude toward the side frame 40 to form the four arm-side protrusions 311. Of the regions between adjacent slits 33, four other regions are deformed to protrude toward the opposite side of the protruding direction of the arm-side protrusions 311 to form the four arm-side recesses 313.

The frame-side protrusions 411 and frame-side recesses 413 are also formed in the side frame 40 in a similar manner as described above.

Next, the bush 62 is fitted by insertion into the arm shaft hole 310 of the lower arm 30. Then, the lower arm 30 and side frame 40 are overlapped with each other such that each of the arm-side protrusions 311 overlaps each of the frame-side recesses 413, and each of the arm-side recesses 313 overlaps each of the frame-side protrusions 411.

Next, as shown in FIG. 5, the female-threaded nut 61 is inserted into the inner hole 620 of the bush 62 from the side of the side frame 40 toward the lower arm 30 such that the end edge of the frame shaft hole 410 in the frame-side protrusion 411 is held between the flange portion 621 of the bush 62 and the flange portion 611 of the female-threaded nut 61.

Next, as shown in FIGs. 3 and 4, the pivot support portion 6 is screwed from the side of the lower arm 30 into the screw hole 612 of the female-threaded nut 61, whereby the stopper 5 is formed.

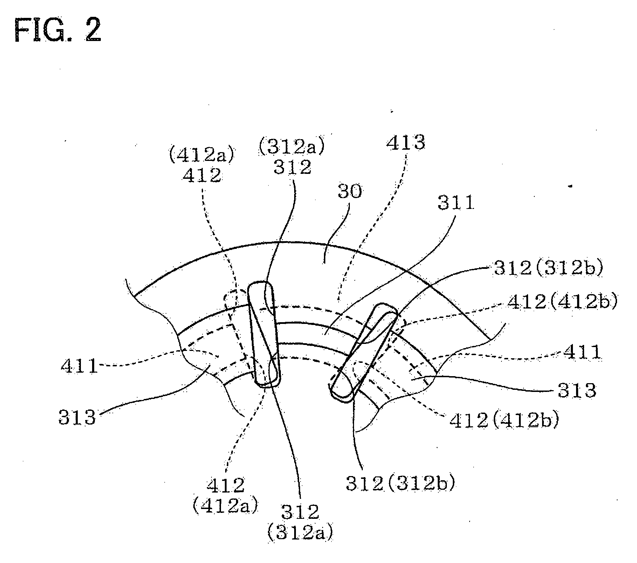

As shown in FIGs. 1 and 2, the lower arm 30 and side frame 40 are overlapped with each other such that a clearance is formed between the arm-side abutment portions 312 on the arm-side protrusions 311 and the frame-side abutment portions 412 on the frame-side protrusions 411. The clearance between the forward-inclination arm-side abutment portions 312a and the forward-inclination frame-side abutment portions 412a is formed for a rotation angle of 16°, while the clearance between the backward-inclination arm-side abutment portions 312b and the backward-inclination frame-side abutment portions 412b is formed for a rotation angle of 10°.

Namely, in this embodiment, the lower arm 30 and side frame 40 are assembled such as to allow the seatback portion 4 to incline forward at 16° and to incline backward at 10°.

Next, the function of the stopper 5 in the reclining structure 1 of this embodiment will be described.

In the reclining structure 1 of this embodiment, as described above, the arm-side protrusions 311 and frame-side recesses 413, and the frame-side protrusions 411 and arm-side recesses 313, are overlapped with each other in a slightly offset manner.

When the vehicle seat 2 receives an excessive impact toward the front in an event of, for example, a front-end collision or sudden braking, the seatback portion 4 inclines forward, whereas when the vehicle seat 2 receives an excessive impact toward the back in an event of a rear-end collision, the seatback portion 4 inclines backward.

In this embodiment, when the seatback portion 4 inclines forward at 16° (see arrow X in FIG. 1), the frame-side protrusions 411 also turn 16° forward therewith. This causes the forward-inclination frame-side abutment portions 412a to abut on the forward-inclination arm-side abutment portions 312a as shown in FIG. 5.

In this embodiment, as mentioned above, two forward-inclination frame-side abutment portions 412a are formed respectively on each of the four frame-side protrusions 411. Therefore, the forward-inclination frame-side abutment portions 412a abut on the forward-inclination arm-side abutment portions 312a at a total of eight locations.

On the other hand, if the seatback portion inclines backward at 10° (see arrow Y in FIG. 1), the frame-side protrusions 411 turn 10° backward therewith. This causes the backward-inclination frame-side abutment portions 412b to abut on the backward-inclination arm-side abutment portions 312b provided on the arm-side protrusions 311.

In this embodiment, as mentioned above, two backward-inclination frame-side abutment portions 412b are formed respectively on each of the four frame-side protrusions 411. Therefore, the backward-inclination frame-side abutment portions 412b abut on the backward-inclination arm-side abutment portions 312b at a total of eight locations.

The effects and advantages of this embodiment will be described below.

In the reclining structure 1 of this embodiment, the arm-side abutment portions 312 and frame-side abutment portions 412 are formed such as to overlap each other on the rotating track around the pivot support portion 6. Therefore, when the seatback portion 4 turns at a predetermined angle around the pivot support portion 6, the arm-side abutment portions 312 and frame-side abutment portions 412 can abut on each other to perform the stopper function.

The configuration is such that the plurality of arm-side abutment portions 312 and the plurality of frame-side abutment portions 412 abut on each other when the seatback portion 4 is inclined at a predetermined angle. Therefore, when the seatback portion 4 is inclined due to an excessive load applied to the vehicle seat 2 forward or backward, the plurality of arm-side abutment portions 312 can abut on the plurality of frame-side abutment portions 412 at a plurality of locations.

Accordingly, even if an excessive torque is applied to the stopper 5 due to the seatback portion 4 inclining at more than a predetermined angle, it is received at the plurality of abutment locations, the force being distributed thereto. Thus a stopper 5 that can withstand an excessive torque can be obtained.

Consequently, when an excessive load is applied to the seatback portion 4, for example, in an event of a collision, the stopper 5 can reliably exhibit its function, whereby a reclining structure 1 capable of reliably exhibiting a stopper function to prevent the seatback portion 4 from inclining at more than a predetermined angle can be obtained.

With the reclining structure 1 capable of reliably exhibiting a stopper function with a simple structure thus obtained, an increase in the weight and production cost of vehicle seats 2 can be avoided.

With the arm-side abutment portions 312 and frame-side abutment portions 412 being formed around the entire circumference of the pivot support portion 6, even if an excessive torque is applied to the stopper 5, it can be sufficiently distributed to the plurality of locations where the arm-side abutment portions 312 and frame-side abutment portions 412 formed around the entire circumference abut on each other. Consequently, a reclining structure 1 for vehicle seats 2 capable of reliably preventing the seatback portion 4 from inclining at more than a predetermined angle and of exhibiting a stopper function with more certainty can be obtained.

Further, with the arm-side abutment portions 312 and frame-side abutment portions 412 being formed circumferentially equally around the pivot support portion 6, a reclining structure 1 capable of more reliably preventing the seatback portion from inclining at more than a predetermined angle and of exhibiting a stopper function with more certainty can be obtained.

The arm-side abutment portions 312 are formed on the arm-side protrusion 311 protruding from the lower arm 30 toward the side frame 40. The frame-side abutment portions 412 are formed on the frame-side protrusion 411 protruding from the side frame 40 toward the lower arm 30. The arm-side protrusion 311 and frame-side protrusion 411 are respectively formed in plurality and alternately arranged in the rotating direction around the pivot support portion 6. The plurality of arm-side abutment portions 312 are respectively formed on both end faces in the rotating direction of each arm-side protrusion 311, and the plurality of frame-side abutment portions 412 are respectively formed on both end faces in the rotating direction of each frame-side protrusion 411. Thereby, a reclining structure 1 capable of even more reliably preventing the seatback portion 4 from inclining at more than a predetermined angle and of exhibiting a stopper function with more certainty can be obtained.

The arm-side protrusions 311 are formed by cutting and raising part of the lower arm 30, both ends of the arm-side protrusions 311 in a direction orthogonal to the rotating direction being coupled to the main body of the lower arm 30. Thereby, arm-side protrusions 311 with excellent strength can be obtained, whereby a reclining structure 1 capable of exhibiting a stopper function with more certainty can be obtained.

The frame-side protrusions 411 are formed by cutting and raising part of the side frame 40, both ends of the frame-side protrusions 411 in a direction orthogonal to the rotating direction being coupled to the main body of the side frame 40. Thereby, frame-side protrusions 411 with excellent strength can be obtained, whereby a reclining structure 1 capable of exhibiting a stopper function with more certainty can be obtained.

With this embodiment, therefore, a vehicle seat reclining structure capable of reliably exhibiting a stopper function with a simple structure can be provided.

The present invention is not limited to the structure shown in the above embodiment. For example, only one end of the arm-side protrusion 311 in a direction orthogonal to the rotating direction may be coupled to the main body of the lower arm 30, and only one end of the frame-side protrusion 411 in a direction orthogonal to the rotating direction may be coupled to the main body of the side frame 40.

## Claims

1. A vehicle seat reclining structure (1) comprising:
a pair of lower arms (30) provided on both left and right sides at a rear end of a seat portion (3) of a vehicle seat (2);
a pair of side frames (40) rotatably supported respectively by the pair of lower arms (30) and disposed on both left and right sides at a lower end of a seatback portion (4) of the vehicle seat (2);
a recliner (7) provided around one of pivot support portions (6) of the lower arms (30) and the side frames (40) for retaining the seatback portion (4) at a desired angle forward or backward around the pivot support portion (6); and
a stopper (5) provided around the other one of pivot support portions (6) of the lower arms (30) and the side frames (40) for restricting degree of inclination of the seatback portion (4) forward or backward around the pivot support portion (6), wherein
the stopper (5) includes a plurality of arm-side abutment portions (312) formed on the lower arm (30) and a plurality of frame-side abutment portions (412) formed on the side frame (40) at such positions as to overlap each other on a rotating track around the pivot support portion (6); and
the stopper (5) is configured such that when the seatback portion (4) is inclined at a predetermined angle, the plurality of arm-side abutment portions (312) and the plurality of frame-side abutment portions (412) abut on each other,
wherein the plurality of arm-side abutment portions (312) is formed on arm-side protrusions (311) protruding from the lower arm (30) toward the side frame (40), and is formed on at least one end face of the arm-side protrusions (311) in a rotating direction around the pivot support portion (6), and wherein the plurality of frame-side abutment portions (412) is formed on frame-side protrusions (411) protruding from the side frame (40) toward the lower arm (30), and is formed on at least one end face of the frame-side protrusions (411) in a rotating direction around the pivot support portion (6), **characterised in that** the arm-side protrusions (311) are formed by cutting and raising part of the lower arm (30), and both ends in a direction orthogonal to the rotating direction of the arm-side protrusions (311) are coupled to a main body of the lower arm (30), and **in that**
the frame-side protrusions (411) are formed by cutting and raising part of the side frame (40), and both ends of the frame-side protrusions (411) in a direction orthogonal to the rotating direction of the frame-side protrusions (411) are coupled to a main body of the side frame (40).

2. The vehicle seat reclining structure (1) according to claim 1, wherein the stopper (5) is configured to restrict both degree of forward inclination and degree of backward inclination of the seatback portion (4), and wherein the plurality of arm-side abutment portions (312) and the plurality of frame-side abutment portions (412) include a plurality of forward-inclination arm-side abutment portions (312a) and a plurality of forward-inclination frame-side abutment portions (412a) that abut on each other when the seatback portion (4) is inclined forward in a predetermined degree, and a plurality of backward-inclination arm-side abutment portions (312b) and a plurality of backward-inclination frame-side abutment portions (412b) that abut on each other when the seatback portion (4) is inclined backward in a predetermined degree.

3. The vehicle seat reclining structure (1) according to claim 1 or 2, wherein the arm-side abutment portions (312) and the frame-side abutment portions (412) are formed around an entire circumference of the pivot support portion (6).

4. The vehicle seat reclining structure (1) according to claim 3, wherein the arm-side abutment portions (312) and the frame-side abutment portions (412) are formed circumferentially equally around the pivot support portion (6).

5. The vehicle seat reclining structure (1) according to any one of claims 1 to 4, wherein the arm-side abutment portions (312) are formed on arm-side protrusions (311) protruding from the lower arm (30) toward the side frame (40), while the frame-side abutment portions (412) are formed on frame-side protrusions (411) protruding from the side frame (40) toward the lower arm (30), and wherein the arm-side protrusions (311) and the frame-side protrusions (411) are respectively formed in plurality and alternately arranged in a rotating direction around the pivot support portion (6), with the plurality of arm-side abutment portions (312) being respectively formed on both end faces in the rotating direction of each of the arm-side protrusions (311), and the plurality of frame-side abutment portions (412) being respectively formed on both end faces in the rotating direction of each of the frame-side protrusion (411).

## Patentansprüche

1. Struktur (1) zum Verstellen eines Fahrzeugsitzes, umfassend:
ein Paar von unteren Armen (30), die sowohl auf der linken Seite als auch auf der rechten Seite an einem hinteren Ende eines Sitzabschnitts (3) eines Fahrzeugsitzes (2) bereitgestellt sind,
ein Paar von Seitenrahmen (40), die jeweils drehbar durch das Paar von unteren Armen (30) gestützt sind und sowohl auf der linken Seite als auch auf der rechten Seite an einem unteren Ende eines Rückenlehnenabschnitts (4) des Fahrzeugsitzes (2) angeordnet sind,
eine Verstelleinrichtung (7), die um einen von Schwenkstützabschnitten (6) der unteren Arme (30) und der Seitenrahmen (40) zum Halten des Rückenlehnenabschnitts (4) bei einem gewünschten Winkel nach vorne oder nach hinten um den Schwenkstützabschnitt (6) bereitgestellt ist, und
einen Anschlag (5), der um den anderen der Schwenkstützabschnitte (6) der unteren Arme (30) und der Seitenrahmen (40) zum Beschränken des Neigungsgrads des Rückenlehnenabschnitts (4) nach vorne oder nach hinten um den Schwenkstützabschnitt (6) bereitgestellt ist, wobei
der Anschlag (5) eine Mehrzahl von armseitigen Widerlagerabschnitten (312), die an dem unteren Arm (30) ausgebildet sind, und eine Mehrzahl von rahmenseitigen Widerlagerabschnitten (412) umfasst, die an dem Seitenrahmen (40) an Positionen ausgebildet sind, so dass sie auf einer Rotationsbahn um den Schwenkstützabschnitt (6) einander überlappen, und
der Anschlag (5) so ausgebildet ist, dass dann, wenn der Rückenlehnenabschnitt (4) bei einem vorgegebenen Winkel geneigt ist, die Mehrzahl von armseitigen Widerlagerabschnitten (312) und die Mehrzahl von rahmenseitigen Widerlagerabschnitten (412) aneinander anstoßen,
wobei die Mehrzahl von armseitigen Widerlagerabschnitten (312) auf armseitigen Vorwölbungen (311) ausgebildet ist, die von dem unteren Arm (30) in der Richtung des Seitenrahmens (40) vorragen, und auf mindestens einer Endfläche der armseitigen Vorwölbungen (311) in einer Drehrichtung um den Schwenkstützabschnitt (6) ausgebildet ist, und
wobei die Mehrzahl von rahmenseitigen Widerlagerabschnitten (412) auf armseitigen Vorwölbungen (411) ausgebildet ist, die von dem Seitenrahmen (40) in der Richtung des unteren Arms (30) vorragen, und auf mindestens einer Endfläche der rahmenseitigen Vorwölbungen (411) in einer Drehrichtung um den Schwenkstützabschnitt (6) ausgebildet ist,
**dadurch gekennzeichnet, dass**
die armseitigen Vorwölbungen (311) durch Schneiden und Hochbiegen eines Teils des unteren Arms (30) ausgebildet worden sind und beide Enden der armseitigen Vorwölbungen (311) in einer Richtung senkrecht zu der Rotationsrichtung der armseitigen Vorwölbungen (311) mit einem Hauptkörper des unteren Arms (30) gekoppelt sind, und dadurch, dass
die rahmenseitigen Vorwölbungen (411) durch Schneiden und Hochbiegen eines Teils des Seitenrahmens (40) ausgebildet worden sind und beide Enden der rahmenseitigen Vorwölbungen (411) in einer Richtung senkrecht zu der Rotationsrichtung der rahmenseitigen Vorwölbungen (411) mit einem Hauptkörper des Seitenrahmens (40) gekoppelt sind.

2. Struktur (1) zum Verstellen eines Fahrzeugsitzes nach Anspruch 1, bei welcher der Anschlag (5) so ausgebildet ist, dass er sowohl den Grad der Vorwärtsneigung als auch den Grad der Rückwärtsneigung des Rückenlehnenabschnitts (4) beschränkt, und wobei die Mehrzahl von armseitigen Widerlagerabschnitten (312) und die Mehrzahl von rahmenseitigen Widerlagerabschnitten (412) eine Mehrzahl von armseitigen Widerlagerabschnitten zur Vorwärtsneigung (312a) und eine Mehrzahl von rahmenseitigen Widerlagerabschnitten zur Vorwärtsneigung (412a), die aneinander anstoßen, wenn der Rückenlehnenabschnitt (4) in einem vorgegebenen Ausmaß nach vorne geneigt wird, sowie eine Mehrzahl von armseitigen Widerlagerabschnitten zur Rückwärtsneigung (312b) und eine Mehrzahl von rahmenseitigen Widerlagerabschnitten zur Rückwärtsneigung (412b), die aneinander anstoßen, wenn der Rückenlehnenabschnitt (4) in einem vorgegebenen Ausmaß nach hinten geneigt wird, umfassen.

3. Struktur (1) zum Verstellen eines Fahrzeugsitzes nach Anspruch 1 oder 2, bei der die armseitigen Widerlagerabschnitte (312) und die rahmenseitigen Widerlagerabschnitte (412) um den gesamten Umfang des Schwenkstützabschnitts (6) ausgebildet sind.

4. Struktur (1) zum Verstellen eines Fahrzeugsitzes nach Anspruch 3, bei der die armseitigen Widerlagerabschnitte (312) und die rahmenseitigen Widerlagerabschnitte (412) im gleichen Abstand in Umfangsrichtung des Schwenkstützabschnitts (6) ausgebildet sind.

5. Struktur (1) zum Verstellen eines Fahrzeugsitzes nach einem der Ansprüche 1 bis 4, bei der die armseitigen Widerlagerabschnitte (312) auf armseitigen Vorwölbungen (311) ausgebildet sind, die von dem unteren Arm (30) in der Richtung des Seitenrahmens (40) vorragen, während die rahmenseitigen Widerlagerabschnitte (412) auf rahmenseitigen Vorwölbungen (411) ausgebildet sind, die von dem Seitenrahmen (40) in der Richtung des unteren Arms (30) vorragen, und wobei die armseitigen Vorwölbungen (311) und die rahmenseitigen Vorwölbungen (411) jeweils in einer Mehrzahl ausgebildet sind und abwechselnd in der Rotationsrichtung um den Schwenkstützabschnitt (6) angeordnet sind, wobei die Mehrzahl von armseitigen Widerlagerabschnitten (312) jeweils auf beiden Endflächen in der Rotationsrichtung von jeder der armseitigen Vorwölbungen (311) ausgebildet ist, und wobei die Mehrzahl von rahmenseitigen Widerlagerabschnitten (412) jeweils auf beiden Endflächen in der Rotationsrichtung von jeder der rahmenseitigen Vorwölbungen (411) ausgebildet ist.

## Revendications

1. Structure d'inclinaison de siège de véhicule (1) comprenant:
une paire de bras inférieurs (30) prévus sur les deux côtés gauche et droit sur une extrémité arrière d'une partie de siège (3) d'un siège de véhicule (2) ;
une paire de cadres latéraux (40) supportés de manière rotative respectivement par la paire de bras inférieurs (30) et agencés sur les deux côtés gauche et droit sur une extrémité inférieure d'une partie de dossier de siège (4) du siège de véhicule (2) ;
un dispositif d'inclinaison (7) prévu autour de l'une des parties de support de pivotement (6) des bras inférieurs (30) et des cadres latéraux (40) pour la retenue de la partie de dossier de siège (4) selon un angle souhaité en avant ou arrière autour de la partie de support de pivotement (6) ; et
un dispositif d'arrêt (5) prévu autour de l'autre des parties de support de pivotement (6) des bras inférieurs (30) et des cadres latéraux (40) pour la restriction du degré d'inclinaison de la partie de dossier de siège (4) en avant ou arrière autour de la partie de support de pivotement (6), dans lequel
le dispositif d'arrêt (5) comprend une pluralité de parties de butée côté bras (312) formées sur le bras inférieur (30) et une pluralité de parties côté cadre (412) formées sur le cadre latéral (40) dans des positions de sorte à se chevaucher l'une l'autre sur une voie rotative autour de la partie de support de pivotement (6) ; et
le dispositif d'arrêt (5) est configuré de sorte que lorsque la partie de dossier de siège (4) est inclinée selon un angle prédéterminé, la pluralité de parties de butée côté bras (312) et la pluralité de parties de butée côté cadre (412) butent l'une sur l'autre,
dans lequel la pluralité de parties de butée côté bras (312) est formée sur des saillies côté bras (311) dépassant du bras inférieur (30) vers le cadre latéral (40) et est formée sur au moins une face d'extrémité des saillies côté bras (311) dans une direction rotative autour de la partie de support de pivotement (6), et dans lequel la pluralité de parties de butée côté cadre (412) est formée sur des saillies côté cadre (411) dépassant du cadre latéral (40) vers le bras inférieur (30) et est formée sur au moins une face d'extrémité des saillies côté cadre (411) dans une direction rotative autour de la partie de support de pivotement (6), **caractérisé en ce que** les saillies côté bras (311) sont formées par découpe et relevage d'une partie du bras inférieur (30), et les deux extrémités des saillies côté bras (311) dans une direction orthogonale à la direction rotative des saillies côté bras (311) sont couplées à un corps principal du bras inférieur (30), et **en ce que**
les saillies côté cadre (411) sont formées par découpe et relevage d'une partie du cadre latéral (40) et les deux extrémités des saillies côté cadre (411) dans une direction orthogonale à la direction de rotation des saillies côté cadre (411) sont couplées à un corps central du cadre latéral (40).

2. La structure d'inclinaison de siège de véhicule (1) selon la revendication 1, dans laquelle le dispositif d'arrêt (5) est configuré pour restreindre à la fois le degré d'inclinaison vers l'avant et le degré d'inclinaison vers l'arrière de la partie de dossier de siège (4) et dans lequel la pluralité de parties de butée côté bras (312) et la pluralité de parties de butée côté cadre (412) comprennent une pluralité de parties de butée (312a) côté bras à inclinaison vers l'avant et une pluralité de parties de butée côté cadre à inclinaison vers l'avant (412a) qui butent l'une contre l'autre lorsque la partie de dossier de siège (4) est inclinée vers l'avant dans un degré prédéterminé, et une pluralité de parties de butée côté bras à inclinaison vers l'arrière (312b) et une pluralité de parties de butée côté cadre à inclinaison vers l'arrière (412b) qui butent l'une contre sur l'autre lorsque la partie de dossier de siège (4) est inclinée vers l'arrière dans un degré prédéterminé.

3. La structure d'inclinaison de siège de véhicule (1) selon la revendication 1 ou 2, dans laquelle les parties de butée côté bras (312) et les parties de butée côté cadre (412) sont formées autour d'une circonférence entière de la partie de support de pivotement (6).

4. La structure d'inclinaison de siège de véhicule (1) selon la revendication 3, dans laquelle les parties de butée côté bras (312) et es parties de butée côté cadre (412) sont formées de manière égale sur la circonférence autour de la partie de support de pivotement (6).

5. La structure d'inclinaison de siège de véhicule (1) selon l'une quelconque des revendications 1 à 4, dans laquelle les parties de butée côté bras (312) sont formées sur des saillies côté bras (311) dépassant du bras inférieur (30) vers le cadre latéral (40) alors que les parties de butée côté cadre (412) sont formées sur des saillies côté cadre (411) dépassant du cadre latéral (40) vers le bras inférieur (30) et dans lequel les saillies côté bras (311) et les saillies côté cadre (411) sont respectivement formées en pluralité et agencées en alternance dans une direction rotative autour de la partie de support de pivotement (6), la pluralité de parties de butée côté bras (312) étant respectivement formée sur les deux faces d'extrémité dans la direction rotative de chacune des saillies côté bras (311), et la pluralité de parties de butée (412) côté cadre étant respectivement formée sur les deux faces d'extrémité dans la direction rotative de chacune de la saillie côté cadre (411).
